# EUROPÄISCHE PATENTANMELDUNG

(11) **EP 1 318 584 A2**
(43) Veröffentlichungstag der Anmeldung: **11.06.2003**
(21) Anmeldenummer: 02080660.0
(22) Anmeldetag: 04.12.2002
(51) Int. Cl.: H02B 11/04

(54) **Einschub für eine Schaltanlage**

(30) Priorität: 04.12.2001 DE 10159314
(71) Anmelder: POST, Reiner, 07973 Greiz (DE)
(72) Erfinder: POST, Reiner, 07973 Greiz (DE)
(74) Vertreter: LENZING GERBER

(57) **Zusammenfassung**

Die Erfindung betrifft einen Einschub (E) für eine elektrische Schaltanlage, die mindestens ein Einschubfach (1a) für den Einschub (E) hat, wobei in der Schaltanlage mindestens eine Strom-Sammelschiene (4) angeordnet ist, an der mindestens eine elektrische Komponenten des Einschubs (E) elektrisch über mindestens einen elektrischen Kontakt (6) ankoppelbar ist, wobei jeder Kontakt (6, 16, 26) eine Kontaktfläche (K) aufweist, die zur Stromübertragung an der zugehörigen Strom-Sammelschiene (4) zur Anlage bringbar ist, wobei der Kontakt (6, 16, 26) aus einem biegsamen Material ist, wobei mittels eines Verstellmechanismus (8, 8a) zur Trennung der elektrischen Kopplung der Kontakt (6, 16, 26) druckbeaufschlagbar ist, wodurch sich der Kontakt (6, 16, 26) verbiegt und hierdurch sich die Kontaktfläche (K) des Kontakts (6) von der zugehörigen Strom-Sammelschiene (4) wegbewegt.

## Beschreibung

Die vorliegende Erfindung betrifft einen Einschub sowie ein Kontaktelement für eine insbesondere modular aufgebaute elektrische Schaltanlage.

Bekannte elektrische Schaltanlagen, welche normal auch "MCC" benannt werden, weisen die.Eigenschaft auf, daß jeder Verbraucherabgang als Einschub ausgeführt ist. Maßgeblicher Vorteil dieses modularen Konzeptes ist die erhöhte Bediensicherheit bezogen auf Personenschutz sowie der schnellen Wiederverfügbarkeit in einem betriebsbedingten Störfall. In einer derartigen elektrischen Schaltanlage verlaufen idR mehrere vertikal und zueinander parallel angeordnete Strom-Sammelschienen. An diesen Strom-Sammelschienen koppeln die Einschübe über elektrische Kontakte an. Die Kontakte können idR erst nach dem Vollständigen Einschieben der Einschübe in dafür vorgesehene Einschubfächer der Schaltanlage durch Verstellen mittels eines Verstellmechanismus den elektrischen Kontakt mit den Strom-Sammelschienen herstellen.

Aus den Dokumenten DE 39 39 355, DE 36 21 748, EP 0 031 597 sowie DE 195 09 474 werden jeweils Kontaktmechanismen beschrieben, die in ihrer Funktion sowie in ihrem Aufbau relativ aufwendig zu realisieren und technisch sicherheitsrelevante Nachteile aufweisen. Alle in den vorgenannten Dokumenten beschriebenen Kontakteinheiten beruhen auf verfahrbaren beweglichen Verbindungen, die nur mit hochflexiblen Kabelanbindungen den Energieabgriff gewährleisten. Zur Kontaktherstellung muß meist die gesamte Steckerkombination mit angeschlossenem Kabel bewegt werden. Bewegte Leitungen in elektrischen Schaltanlagen stellen jedoch ein erhöhtes Fehlerpotential und Risiko dar und sind zusätzlich relativ aufwendig in der Realisierung.

Aus der DE 195 09 474 ist eine Kontaktverbindung ohne beweglichen Leiter bekannt. Durch einen Gleitkontakt werden der feststehende Anschlußpunkt und die Stromschiene miteinander verbunden. Auch diese Lösung ist in ihrem Aufbau aufwendig, da ein Schleifkontakt stets einen Doppelkontakt darstellt und neben den stromführenden Kontakten noch federnde Elemente benötigt werden, um die Kontaktkräfte zu erzeugen.

Die Aufgabe der vorliegenden Erfindung besteht darin, einen Kontaktmechanismus für einen Einschub bzw. eine Schaltanlage bereitzustellen, der mit möglichst geringem technischen Aufwand herstellbar ist und eine möglichst einfache, jedoch äußerst sichere Kontaktierung zwischen dem elektrischen Kontakt eines Einschubs und einer Stromsammelschiene ermöglicht.

Diese Aufgabe wird erfindungsgemäß durch Einschübe mit den Merkmalen der Ansprüche 1 oder 2 sowie mittels eines elektrischen Kontakts gemäß des Anspruchs 13 gelöst.

Vorteilhaft ermöglichen die verwendeten elektrischen Kontakte zum Anschluß der Schaltgeräte eines Einschubs an die Strom-Sammelschienen eine Verbindung als Druckkontakt. Ein Druckkontakt weist erhebliche Vorteile aufgrund der einfachen Realisierung sowie des universellen Einsatzes gegenüber den aus dem Stand der Technik bekannten Lösungen auf. Die erfindungsgemäßen Kontakte können selbst bei seitlicher Anordnung der Strom-Sammelschienen eingesetzt werden. Mit seitlicher Anordnung der Strom-Sammelschienen ist dabei gemeint, daß die Kontakte aus der Seitenwand eines Einschubs herausgreifen, um mit den seitlich neben dem Einschub angeordneten Sammelschienen anzukoppeln.

Nachteilig ist bei den in der DE 195 09 474 beschriebenen Kontaktverbindungen, daß beim Verschweißen der Kontakte im Störfall aufgrund zu höher Ströme ein einfaches Wechseln der Module unmöglich ist, da die Steckverbindung stets die Strom-Sammelschiene umgreift oder in diese eingreift. Bei einem Störfall werden die Kontakte daher großflächig miteinander verschweißt, so daß auch bei Aufbringen großer Kräfte die Schweißverbindung zwischen Strom-Sammelschiene und Kontakt nicht mehr gelöst werden kann. Um dennoch theoretisch die Möglichkeit zu haben, entsprechend verschweißte Kontakte von Sammelschienen zu lösen, werden die in der DE 195 09 474 offenbarten Kontakte stets an der Rückseite eines Einschubs angeordnet, damit durch Ziehen am Einschub die Schweißverbindungen getrennt werden können. Das Anordnen der Strom-Sammelschienen an der Rückseite der Einschübe hat jedoch den Nachteil, daß die Strom-Sammelschienen nur über die Rückwand der elektrischen Schaltanlage erreichbar sind. Steht die elektrische Schaltanlage an einer Wand, so muß die elektrische Schaltanlage stets erst von der Wand wegbewegt werden, um an die Strom-Sammelschienen zu gelangen.

Bei der Erfindung ist es nun vorteilhaft möglich, die Strom-Sammelschienen auch seitlich neben den Einschüben anzuordnen, wodurch die Strom-Sammelschienen auch von der Vorderseite oder von der Seite der elektrischen Schaltanlage her zugänglich sind und nunmehr die elektrische Schaltanlage problemlos an einer Wand anordbar ist. Auch bei verschweißten Kontakten ist es nunmehr möglich, durch Herausziehen der Einschübe die verschweißten Kontakt von den Strom-Sammelschienen zu lösen, da diese die Strom-Sammelschienen nicht umgreifen, sondern lediglich an diesen anliegen. Durch die vorteilhafte Erreichbarkeit der Strom-Sammelschienen und somit auch der Kontakte zwischen den elektrischen Kontakten der Einschübe und der Strom-Sammelschienen können eventuell verschweißte Kontakte auch direkt mit einem entsprechendem Werkzeug gelöst werden, ohne den Einschub mit roher Gewalt aus dem Einschublahmem der elektrischen Schaltanlage herausreißen zu müssen.

Der erfindungsgemäße elektrische Kontakt ist vorteilhaft aus einem Material hergestellt, welches federnde Eigenschaften sowie eine hohe Stromtragfähigkeit und bestes Relaxaktionsverhalten aufweist.

Der Kontakt ist vorteilhaft derart geformt, daß er sich leicht mittels eines Verstellmechanismus verbiegen läßt. Nachfolgend sollen hier exemplarisch nur zwei mögliche Ausführungsvarianten beschrieben werden. Zum einen kann der elektrische Kontakt derart federnd ausgestaltet sein, daß er ohne äußere Krafteinwirkung federnd gegen eine Strom-Sammelschiene drückt. Durch einen Verstellmechanismus kann der elektrische Kontakt dann so verbogen werden, daß die Ankoppelung des elektrischen Kontakts von der Strom-Sammelschiene gelöst wird. Vorteilhaft verstellt der Verstellmechanismus sämtliche elektrischen Kontakte gleichzeitig, die mit jeweils zugehörigen Strom-Sammelschienen Stromübergänge für einen Einschub bilden.

In einer anderen möglichen Ausgestaltung der erfindungsgemäßen Kontakte sind diese ebenfalls aus einem biegsamem und federnden Material, wobei jedoch ohne Kraftausübung der elektrische Kontakt nach eingeschobenen Einschub in die elektrische Schaltanlage nicht mit der zugehörigen Strom-Sammelschiene in Kontakt ist. Erst durch einen Verstellmechanismus wird der jeweilige Kontakt derart verbogen, daß seine Kontaktfläche gegen die zugehörige Strom-Sammelschiene gedrückt wird.

Der erfindungsgemäße elektrische Kontakt ist vorteilhaft aus einem flachen Band aus elektrisch leitfähigem Material gefertigt, wobei das Band einen Biegbereich aufweist, der insbesondere als Halbkreis, Viertelkreis oder einem sonstigen Teil eines Kreises geformt ist. Dieser federnde Bereich kann selbst die Kontaktfläche für den elektrischen Stromübergang zwischen der Strom-Sammelschiene und dem elektrischen Kontakt bilden. Es ist jedoch auch möglich, daß an diesem Biegebereich direkt oder indirekt ein Bereich angrenzt, der die Kontaktfläche bildet. Der elektrische Kontakt ist insbesondere fest mit dem Einschub verbunden, wobei der fest am Einschub befestigte Teil des Kontaktes zur Kontaktierung mit elektrischen Leitern des Einschubs dient. An dem Biegebereich des elektrischen Kontakts ist vorteilhaft eine Angriffsfläche angeformt, die mit dem Verstellmechanismus zusammenwirkt. Es ist jedoch genauso möglich, daß der Verstellmechanismus direkt an dem Biegebereich angreift.

Der wesentliche Vorteil des erfindungsgemäßen Kontakts gegenüber dem aus dem Stand der Technik bekannten Kontakten besteht darin, daß durch die Formgebung des Druckkontakts dieser einteilig ausgebildet werden kann, wodurch ein geringer mechanischer Verschleiß erzielt wird, da keine mechanische Belastung zwischen beweglichen Teilen, wie sie bei Kontaktmechanismen gemäß des Standes auftreten, möglich ist.

Vorteilhaft ist de Kontakt in einem Isoliergehäuse eingebettet, wodurch eine erhöhte Sicherheit für das Bedienpersonal erzielt wird. Zur weiteren Erhöhung der Sicherheit des Bedienpersonals, insbesondere einer elektrischen Schaltanlage, können die Strom-Sammelschienen bei nicht angekoppelten Kontakten durch Schiebeelemente von dem Einschubfach für den Einschub getrennt sein. Erst durch Bewegen der Kontaktflächen in Richtung der Strom-Sammelschienen werden die Schiebeelemente von den Kontakten selbst oder über einen zusätzlichen Mechanismus bewegt, so daß sie eine fensterartige Öffnung für den Durchgriff der elektrischen Kontakte hin zu den Strom-Sammelschienen ermöglichen. Sofern die Schiebeelemente nicht durch die Bewegung der elektrischen Kontakte bewegt werden, ist es auch möglich, daß durch eine Ankopplung an den Verstellmechanismus die Schiebeelemente bewegt werden. Die Schiebeelemente dienen sozusagen als Schottbarriere zur Trennung des Sammelschienenraums vom Einschubfach, wodurch der Sammelschienenraum berührungssicher verschlossen ist.

Zum Bewegen der Kontakte in Richtung der Strom-Sammelschienen muß das Bedienpersonal ein Betätigungselement betätigen, womit der Verstellmechanismus die Kontakte bewegt. Insbesondere ist zum Betätigen des Betätigungselements ein Spezialschlüssel notwendig. Vorteilhaft ist eine Verriegelungseinheit mit dem Verstellmechanismus mittels eines mechanischen UND/ODER-Gatters mechanisch oder elektronisch verbunden, so daß die Bewegungsabläufe zwangsgeführt und somit fehlerfrei erfolgen. Das mechanische UND/ODER-Gatter kann z.B. durch verschiebbare mechanische Lochstreifen realisiert werden. In dieses Logikgatter greifen z.B. Leistungsschalterwelle, Betätigungswelle des Verstellmechanismus sowie Steuersteckerhalter ein. Die Leistungsschalterwelle darf zum Beispiel nur dann zur Einschaltung freigegeben sein, wenn die Leistungskontakte die Strom-Sammelschienen sicher kontaktiert haben, oder darf eingeschaltet sein, wenn Leistungskontakte von den Strom-Sammelschienen sicher abgehoben sind und der Steuerstecker in den Gegenkontakt eingefahren ist. Sofern ein Spezialschlüssel verwendet wird, ist das Einführen des Spezialschlüssels nur dann zur ermöglichen, wenn eine Bedienung nach der Wahrheitstabelle des UND/ODER-Gatters zulässig ist. Vorteilhaft wird durch die Lochrastermethode die Verriegelungslogik auf ein Minimalprinzip in Einfachheit und Materialeinsatz gebracht.

Nachfolgend werden die erfindungsgemäßen Komponenten anhand der Figuren näher erläutert.

Es zeigen:
- Fig. 1:: eine Querschnittsdarstellung durch eine elektrische Schaltanlage mit eingeschobenem Einschub und angekoppelten Kontakten an Strom-Sammelschienen;
- Fig. 2:: eine elektrische Schaltanlage gemäß der Fig. 1 mit leicht aus dem Einschubfach herausgezogenem Einschub;
- Fig. 3 und 4:: Detaildarstellungen eines Verstellmechanismus für drei Kontakte, die einmal abgekoppelt und einmal an Strom-Sammelschienen angekoppelt sind;
- Fig. 5:: eine alternative Ausführungsform eines erfindungsgemäßen elektrischen Kontakts;
- Fig. 6 und 7:: eine weitere mögliche Ausgestaltung eines erfindungsgemäßen elektrischen Kontaktes unter Zusammenwirkung mit einem Verstellmechanismus;
- Fig. 8 und 9:: eine weitere mögliche Ausgestaltung eines erfindungsgemäßen elektrischen Kontaktes unter Zusammenwirkung mit einem Verstellmechanismus;
- Fig. 10:: eine weitere alternative Ausführungsform eines erfindungsgemäßen elektrischen Kontakts;

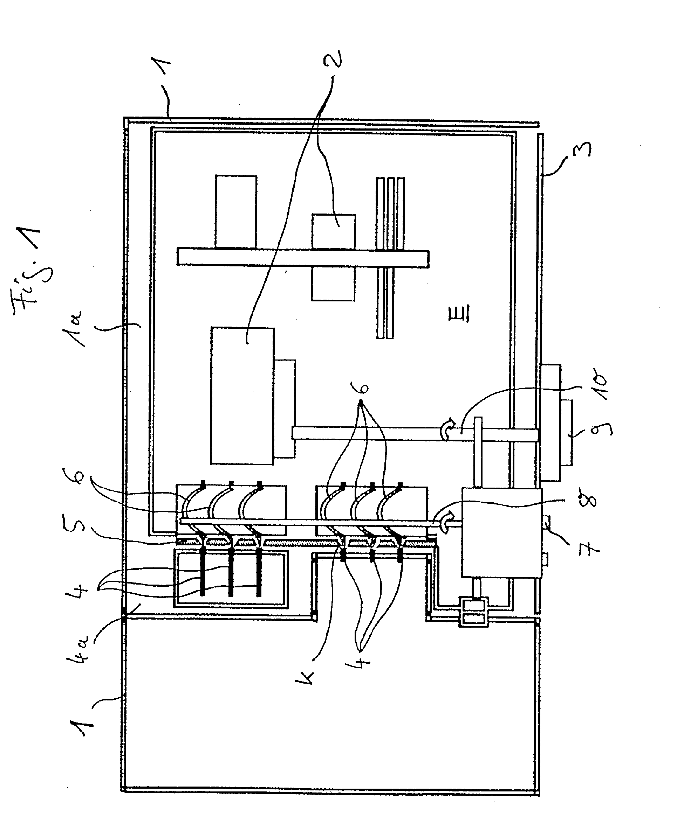

Die Fig. 1 zeigt eine Querschnittsdarstellung durch eine elektrische Schaltanlage, die einen Einschubrahmen 1 aufweist. Der Einschubrahmen 1 weist mindestens ein Einschubfach 1a für mindestens einen Einschub E auf, in dem elektrische Komponenten 2 angeordnet sind. Der Einschub E weist elektrische Kontakte 6 auf, die mittels eines Verstellmechanismus 7, 8 verstellt werden können, so daß sie mit ihrem Kontaktflächen K die Stromsammelschienen 4 druckbeaufschlagen. Die Stromsammelschienen 4 sind mittels Schiebeelementen 5, welche Schottbarrieren bilden, berührungssicher im Sammelschienenraum 4a angeordnet. Durch Betätigen des Verstellmechanismus 7, 8 werden die Schiebeelemente 5 entweder direkt über die Kontakte 6 verschoben, so daß die Kontakte 6 mit den Strom-Sammelschienen 4 in Berührung kommen können. Es ist jedoch auch möglich, das der Verstellmechanismus 8 mechanisch die Einschübe 5 beim Bewegen der Kontakte 6 verstellt.

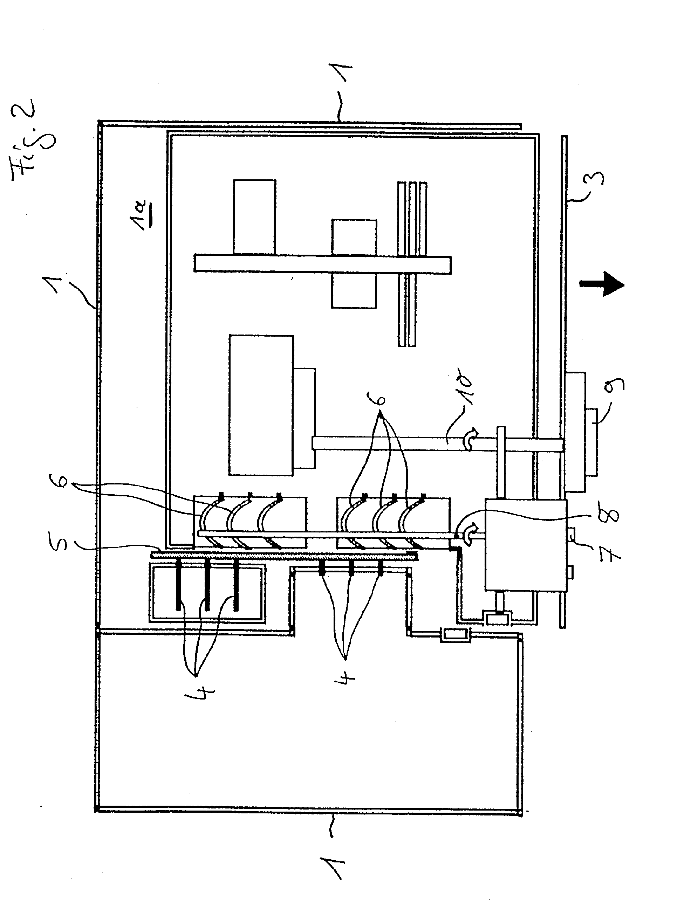

Die Fig. 2 zeigt, wie der Einschub E in Pfeilrichtung aus dem Einschubfach 1a des Einschubrahmens 1 herausziehbar ist. Die Strom-Sammelschienen 4 erstrecken sich in Richtung der Schnittnormalen der elektrischen Schaltanlage.

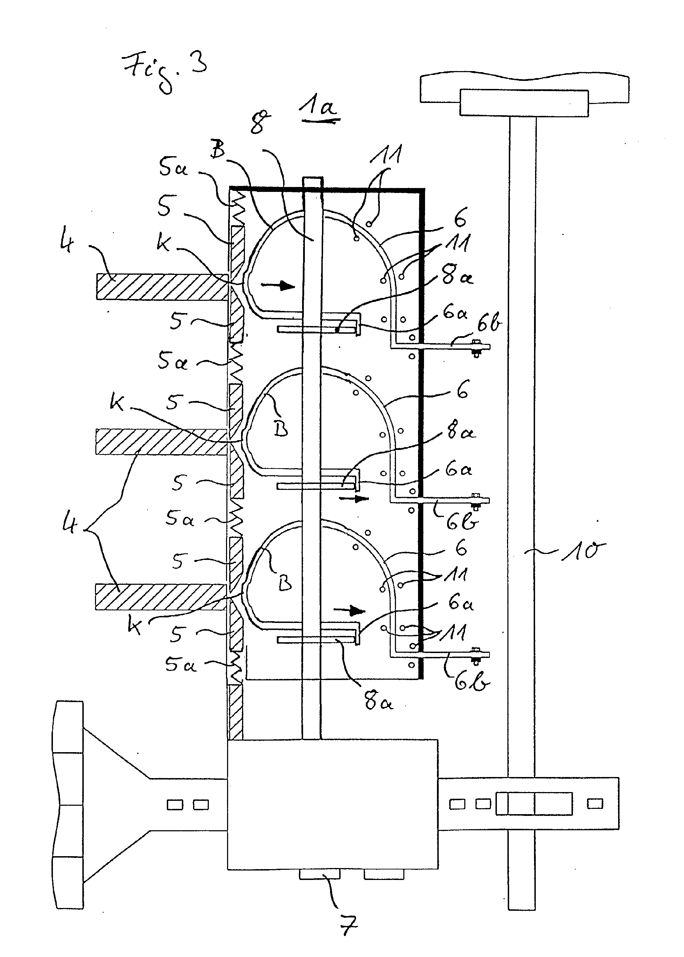

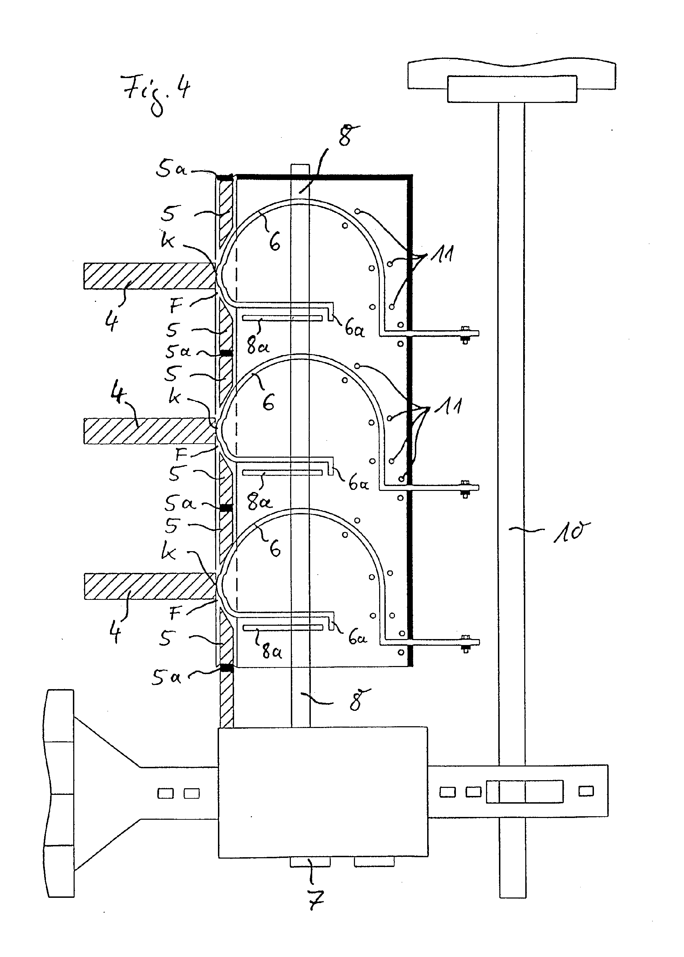

Die Figuren 3 und 4 zeigen Detaildarstellungen der elektrischen Schaltanlage. Der Verstellmechanismus weist ein Betätigungselement 7 auf, welches über ein mechanisches Getriebe oder direkt eine Welle 8 antreibt, auf der Führungskurven in Form von Nocken 8a angeordnet sind, wobei jeweils eine Nocke 8a auf einen elektrischen Kontakt 6 wirkt und auf dessen Kraft-Angriffsfläche 6a in Pfeilrichtung eine Kraft ausüben kann, so daß bei entsprechend verstellter Welle 8 die elektrischen Kontakte 6 derart verbogen werden, daß die Kontaktflächen K nicht gegen die Strom-Sammelschienen 4 drücken (Fig. 3). Sofern die Welle 8 verdreht wird, entlasten die Nocken 8a die elektrischen Kontakte 6, so daß diese aufgrund ihrer Vorspannung entspannen und die Kontaktfläche K sich in Richtung der Strom-Sammelschienen 4 bewegen und an diesen mit ihren Kontaktflächen K zur Anlage kommen. Bei der Bewegung verschieben die elektrischen Kontakte 6 mit ihren Kontaktflächen K die Schiebeelemente 5, so daß ein Durchgriff zu den Strom-Sammelschienen 4 möglich ist. Wie in Fig. 3 dargestellt, sind die Schiebeelemente 5 mittels Federn 5a druckbeaufschlagt, so daß bei nicht bestehendem Kontakt zwischen elektrischem Kontakt 6 und Strom-Sammelschiene 4 die Strom-Sammelschiene 4 berührungssicher hin zum Einschubfach 1a abgeschottet ist. Der Verstellmechanismus 7, 8, 8a ist mechanisch mit einer Leistungsschalterwelle 10 wirkverbunden, wobei die Wirkverbindung über ein mechanisches UND/ODER-Gatter realisiert ist, welches nicht näher dargestellt ist. Hierdurch wird sichergestellt, daß die Leistungsschalterwelle 10 und die Welle 8 des Verstellmechanismus nur bei bestimmten Situationen verdreht werden können.

Die elektrischen Kontakte 6 sind durch Halterungsstifte 11 in Position gehalten und können über nicht dargestellte Befestigungsmittel an dem Einschub E mit ihren Enden 6b befestigt werden. An den Enden 6b können elektrische Kabel zur Stromankopplung befestigt werden. Der elektrische Kontakt 6 weist einen Biegebereich B auf, der die Biegekräfte, verursacht durch den Verstellmechanismus 7, 8, 8a aufnimmt. An den Biegebereich B grenzt ein Bereich an, der die Kontaktfläche K des Kontaktes 6 bildet. An den Kontaktflächenbereich K grenzt ein weiterer Bereich 6a an, der die Kraft-Angriffsfläche 6a für die Nocken 8a bildet.

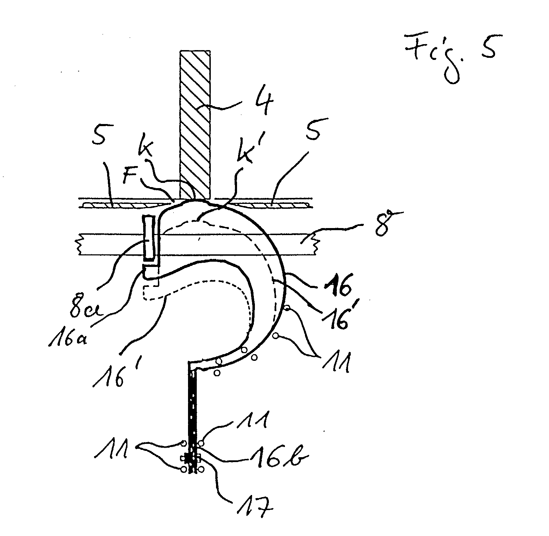

Die Fig. 5 zeigt eine alternative Ausführungsform eines elektrischen Kontaktes 16. Der elektrische Kontakt 16 ist als Schlaufe ausgeformt, wobei die Enden 16b mittels einer Befestigungsschraube, welche insbesondere auch zum Anschluß von elektrischen Leitungen dient, zusammengehalten werden. Der elektrische Kontakt 16 ist mittels Stiften 11, welche insbesondere am Einschub E angeformt sind, in Position gehalten. Die Stifte 11 sind derart angeordnet, daß sich der elektrische Kontakt 16 mittels des Verstellmechanismus, gebildet durch eine Welle 8 mit darauf befindlichen Nocken 8a, verbiegen läßt (gestrichelte Darstellung, Bezugszeichen 16'). Der elektrische Kontakt 16 ist somit so vorgespannt, daß er von sich aus mit seiner Kontaktfläche K gegen die Strom-Sammelschiene 4 drückt. Erst durch Druckbeaufschlagung mittels des Nocken 8a gegen die Kraft-Angriffsfläche 16a des Kontaktes 16 wird dieser von der Strom-Sammelschiene 4 wegbewegt.

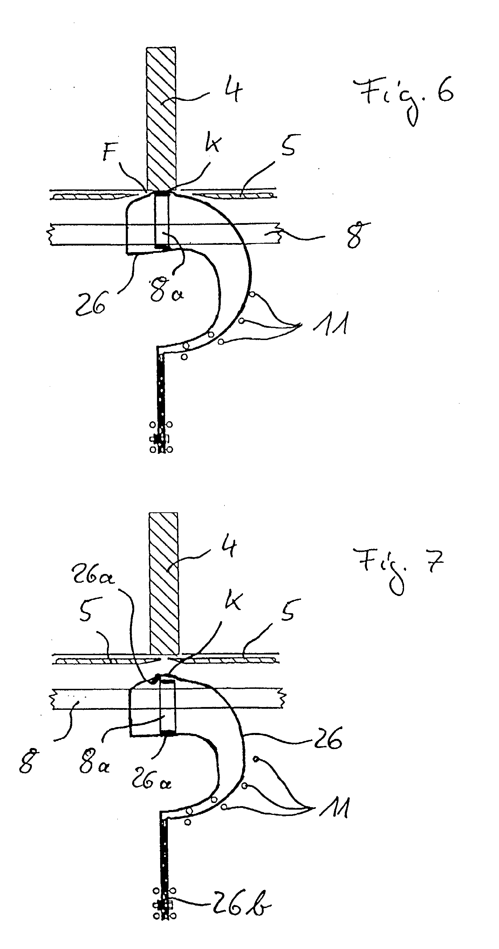

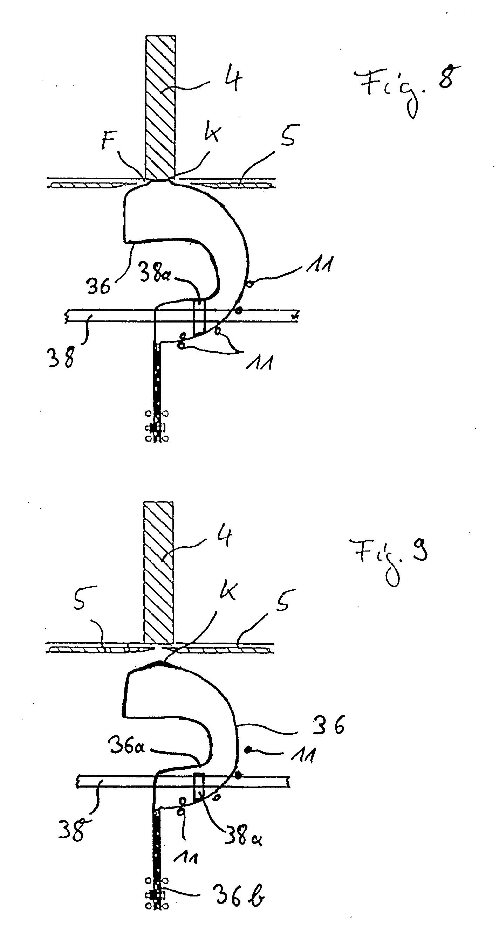

Die Figuren 6 und 7 zeigen eine weitere Ausführungsform eines erfindungsgemäßen Kontakts 26, wobei der elektrische Kontakt 26 keine Vorspannung benötigt, da er zum einen vom Nocken 8a von der Stromschiene 4 wegbewegt (Fig. 7) und durch weiteres Verdrehen der Welle 8 durch den Nocken 8a gegen die Strom-Sammelschiene 4 druckbeaufschlagbar ist (Fig. 6). Die Funktionsweise der Schiebeelemente 5 ist analog zu den Ausführungsbeispielen gemäß der Fig. 1 bis 5. Bei der Ausführungsform gemäß der Fig. 6 und 7 ist es problemlos möglich, dem elektrischen Kontakt eine Vorspannung zu geben, so daß zusätzlich zu der Kraft des Nockens 8a der Kontakt entweder in Richtung Strom-Sammelschiene 4 oder von dieser weg von sich aus kraftbeaufschlagt ist.

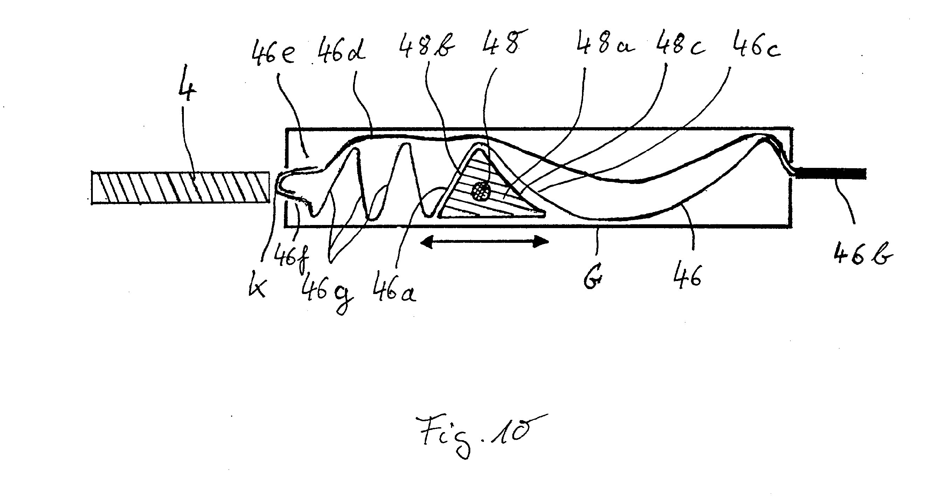

Die Figuren 6 und 7 zeigen eine weitere Ausführungsform eines erfindungsgemäßen Kontakts 36. Der elektrische Kontakt 36 weist eine Vorspannung auf, durch die die Kontaktfläche K im unbelasteten Zustand (Fig. 9) von der Strom-Sammelschiene abgekoppelt ist. Durch Verdrehen des Nockens 38a über die Welle 38 wird der Kontakt 36 an seiner Fläche 36a in Richtung der Strom-Sammelschiene 4 druckbeaufschlagt, wodurch seine Kontaktfläche K gegen die Strom-Sammelschiene 4 gedrückt wird. Aufgrund der Gestaltung des Kontakts 36' wird er federnd gegen die Strom-Sammelschiene gedrückt (Fig. 8). Die Funktionsweise der Schiebeelemente 5 ist analog zu den Ausführungsbeispielen gemäß der Fig. 1 bis 5. Der Nocken 38a kann vorteilhaft aus einem leitfähigem Material sein, wodurch der elektrische Strom auch über den Nocken 38a hin zum Anschluß 36b des Kontakts geführt wird. Die Welle 38 muß in diesem Fall aus einem nichtleitenden Material gefertigt sein. Es ist jedoch auch möglich, den Nocken 38a isoliert auf der Welle 38 anzuordnen bzw. zu befestigen.

Die Fig. 10 zeigt ein weiteres Ausführungsbeispiel eines Kontakts 46. Der Kontakt 46 ist in einem geschlossenen Gehäuse G angeordnet, wobei eine Welle 48 seitlich in das Gehäuse G eingreift und von einem nicht dargestellten Verschiebemechanismus in Pfeilrichtung verstellbar ist. Auf der Welle 48 ist ein Schieberelement 48a angeordnet, welches den Bewegungen der Welle 48 folgt und je nach Bewegungsrichtung mit seinen Anlageflächen 48b bzw. 48c gegen die Kraft-Angriffsfläche 46a bzw. 46c drückt, so daß entweder der Kontakt mit seiner Kontaktfläche K nach links gegen die Strom-Sammelschiene 4 gedrückt oder von der Strom-Sammelschiene 4 weggedrückt bzw. bewegt wird. Der Kontakt 46 ist aus einem gebogenen Blech geformt, damit der Kontakthub der Kontaktfläche K bei ruhendem Kontaktanschluß bzw. Ende 46b durchgeführt werden kann. Die gefaltete bzw. federartige Ausgestaltung des Bereichs 46g, welcher zwischen der Kraft-Angriffsfläche 46a und der Kontaktfläche K angeordnet ist, bewirkt zudem bei geschlossenem Stromkreis eine Federwirkung, so daß auch bei Erschütterungen ein sicherer Kontakt zwischen der Kontaktfläche K und der Strom-Sammelschiene 4 gewährleistet ist. Der Kontakt 46 kann auch mittels eines einstückigen Federblechs gebildet sein, welches als Schleife ausgebildet ist und die in Fig. 10 dargestellte Form hat, wobei die freien Enden 46e und 46f miteinander verbunden sind oder durch Federwirkung aneinanderliegen, wobei es auch möglich ist, die freien Enden bei 46b miteinander zu verbinden.

Bei einer bevorzugten Ausführungsform ist der Kontakt 46 aus einem federnden, leitendem Material, insbesondere Stahlblech gefertigt, welches mit den Bezugszeichen 46a, 46g, 46f gekennzeichnet ist und mit dem Schieber 48 zusammenwirkt. Um die Möglichkeit einer erhöhten Stromtragfähigkeit zu realisieren, kann bei dieser Ausführungsform zusätzlich ein insbesondere hochflexibles Leiterband 46d, z.B. in Form einer Kupferlitze eingelegt werden, welches an den Enden 46e mit dem Ende 46f des Kontakts 46 z.B. durch Vernieten, Verpressen oder Verschweißen verbunden werden kann. Das andere Ende des Leiterbandes 46d kann bei 46b z.B. durch Verspannen mit einer nicht dargestellten umgreifenden Unterlegplatte verbunden werden. Wird generell ein hochflexibles Leiterband 46d verwendet, so kann das Kontaktmaterial z.B. durch eine Stahlblechfeder ersetzt werden.

Es ist selbstverständlich möglich, die dargestellten Ausführungsbeispiele leicht abzuwandeln, ohne von dem erfindungsgemäßen Prinzip abzuweichen.

## Patentansprüche

1. Einschub (E) für eine elektrische Schaltanlage, die mindestens ein Einschubfach (1a) für den Einschub (E) hat, wobei in der Schaltanlage mindestens eine Strom-Sammelschiene (4) angeordnet ist, an der mindestens eine elektrische Komponenten des Einschubs (E) elektrisch über mindestens einen elektrischen Kontakt (6) ankoppelbar ist, wobei jeder Kontakt (6, 16, 26) eine Kontaktfläche (K) aufweist, die zur Stromübertragung an der zugehörigen Strom-Sammelschiene (4) zur Anlage bringbar ist, **dadurch gekennzeichnet, daß** der Kontakt (6, 16, 26) aus einem biegsamen Material ist, wobei mittels eines Verstellmechanismus (8, 8a) zur Trennung der elektrischen Kopplung der Kontakt (6, 16, 26) druckbeaufschlagbar ist, wodurch sich der Kontakt (6, 16, 26) verbiegt und hierdurch sich die Kontaktfläche (K) des Kontakts (6) von der zugehörigen Strom-Sammelschiene (4) wegbewegt.

2. Einschub (E) nach dem Oberbegriff des Anspruch 1, **dadurch gekennzeichnet, daß** der Kontakt (6, 16, 26) aus einem biegsamen Material ist und mit seinem einen Ende (6b, 16b, 26b) an dem Einschub (E) befestigt ist, wobei mittels eines Verstellmechanismus (8, 8a) Herstellung der elektrischen Kopplung der Kontakt (6, 16, 26) druckbeaufschlagbar ist, wodurch sich der Kontakt (6, 16, 26) verbiegt und hierdurch sich die Kontaktfläche (K) des Kontakts (6, 16, 26) in Richtung der zugehörigen Strom-Sammelschiene (4) bewegt und an ihr zum Anliegen kommt.

3. Einschub (E) nach Anspruch 1 oder 2, **dadurch gekennzeichnet, daß** der Kontakt (6, 16, 26) einen im wesentlichen halbkreisförmig geformten Bereich (B) aufweist.

4. Einschub (E) nach Anspruch 3, **dadurch gekennzeichnet, daß** sich an den halbkreisförmigen Bereich (B) ein Bereich anschließt, der die Kontaktfläche (K) bildet.

5. Einschub (E) nach Anspruch 3 oder 4, **dadurch gekennzeichnet, daß** sich an den halbkreisförmigen Bereich (B) ein abgewinkelter Bereich (6b, 16b, 26b) anschließt, mittels dem der Kontakt (6, 16, 26) an dem Einschub (E) befestigt ist.

6. Einschub (E) nach Anspruch 1 oder 2, **dadurch gekennzeichnet, daß** der Kontakt (16, 26) aus einem flachen Band aus elektrisch leitfähigem Material gefertigt ist, wobei das Band zu einer Schlaufe geformt ist, wobei die beiden Enden (16b, 26b) des die Schlaufe bildenden Bandes an dem Einschub (E) befestigt sind.

7. Einschub (E) nach Anspruch 6, **dadurch gekennzeichnet, daß** das Band aus mehreren Lamellenbändern zusammengesetzt ist.

8. Einschub (E) nach einem der vorherigen Ansprüche, **dadurch gekennzeichnet, daß** das der Verstellmechanismus eine Welle (8) aufweist, die mechanisch mit einem Betätigungselement (7) verbunden ist, wobei auf der Welle (8) Nocken (8a) angeordnet sind, die die einzelnen Kontakte (6) bei Betätigung des Betätigungselements (7) druckbeaufschlagen und verbiegen.

9. Einschub (E) nach einem der vorherigen Ansprüche, **dadurch gekennzeichnet, daß** der Kontakt (6, 16, 26) mit Ausnahme der die Kontaktflächen und Anschlußflächen (K; 6b, 16b, 26b) bildenden Bereiche von einem isolierenden Material ummantelt ist.

10. Einschub (E) nach einem der vorherigen Ansprüche, **dadurch gekennzeichnet, daß** der Verstellmechanismus (8, 8a) mechanisch und/oder elektrisch die Betätigung von Schaltern, etc. verhindert, sofern die Kontakte (6, 16, 26) sicher an den Strom-Sammelschienen anliegen und/oder von diesen abgehoben sind.

11. Einschub (E) nach einem der vorherigen Ansprüche, **dadurch gekennzeichnet, daß** der Kontakt (K) aus einem insbesondere federnden Material, insbesondere Stahlblech (46) gefertigt ist, wobei der Kontakt (K) über zusätzliches insbesondere hochflexibles Leiterband (46d) mit dem Anschluß (46b) in Verbindung ist.

12. Elektrische Schaltanlage zur Verwendung mit einem Einschub (E) nach einem der vorherigen Ansprüche.

13. Elektrische Schaltanlage zur Verwendung mit einem Einschub (E) nach Anspruch 12, **dadurch gekennzeichnet, daß** an dem Einschubrahmen (1) vor jeder Strom-Sammelschiene (4) mindestens ein Schiebeelement (5) verschiebbar angeordnet ist, welches durch den Kontakt (6, 16, 26) bewegbar ist, und zur Herstellung der elektrischen Kopplung von dem Kontakt (6, 16, 26) selbst verschoben wird und eine fensterartige Öffnung (F) für den Durchgriff des mindestens einen Kontakts (6) zur jeweils zugehörigen Strom-Sammelschiene (4) freigibt.

14. Elektrischer Kontakt (6, 16, 26) zur elektrischen Ankopplung an eine Strom-Sammelschiene (4), **dadurch gekennzeichnet, daß** der Kontakt (6, 16, 26) aus einem biegsamen elektrisch leitfähigem Material ist, wobei der Kontakt (6, 16, 26) aus einem Band hergestellt ist, welches einen Biegebereich (B) aufweist, der insbesondere halbkreisförmig geformt ist, wobei ein Abschnitt dieses Bereichs eine Kontaktfläche (K) bildet, wobei sich an einem ersten Ende dieses Bereiches ein Bereich (6b, 16b, 26b) anschließt, der zur Befestigung des Kontaktes (6, 16, 26) dient, wobei sich an dem anderen Ende ein Bereich anschließt, der eine Kraft-Angriffsfläche (6a, 16a) bildet, wobei bei Kraftausübung auf die Kraft-Angriffsfläche (6a, 16a, 26a), sich der Kontakt (6, 16b, 26b) verbiegt und die elektrische Ankopplung an eine Strom-Sammelschiene (4) unterbrechbar oder schließbar ist.

15. Elektrischer Kontakt (6, 16, 26) zur elektrischen Ankopplung an eine Strom-Sammelschiene (4), **dadurch gekennzeichnet, daß** der Kontakt (6, 16, 26) aus einem biegsamen elektrisch leitfähigem Material ist, wobei der Kontakt (6, 16, 26) aus einem Band hergestellt ist, welches zu einer Schlaufe geformt ist, wobei zumindest ein Ende des Bandes zur Befestigung des Kontaktes (6, 16, 26) dient, wobei die Schlaufe eine Kontaktfläche (K) bildet, und zusätzlich eine Kraft-Angriffsfläche (6a, 16a, 26a) bildet, wobei bei Kraftausübung auf die Kraft-Angriffsfläche (6a, 16a, 26a), sich der Kontakt (6) verbiegt und die elektrische Ankopplung an eine Strom-Sammelschiene (4) unterbrechbar oder schließbar ist.

16. Elektrischer Kontakt zur elektrischen Ankopplung an eine Strom-Sammelschiene, **dadurch gekennzeichnet, daß** der Kontakt (K) aus einem insbesondere federnden Material, insbesondere Stahlblech (46) gefertigt ist, wobei der Kontakt (K) über zusätzliches insbesondere hochflexibles Leiterband (46d) mit dem Anschluß (46b) in Verbindung ist.

17. Elektrischer Kontakt nach einem der Ansprüche 14 bis 16, **dadurch gekennzeichnet, daß** der Kontakt (6, 16, 26, 46) als Feder ausgebildet ist.

18. Elektrischer Kontakt nach einem der Ansprüche 14 bis 17, **dadurch gekennzeichnet, daß** das Band aus einzelnen Lamellenbändern zusammengesetzt ist.
